# EUROPÄISCHE PATENTANMELDUNG

(11) **EP 1 632 724 A1**
(43) Veröffentlichungstag der Anmeldung: **08.03.2006**
(21) Anmeldenummer: 04450169.0
(22) Anmeldetag: 02.09.2004
(51) Int. Cl.: F24D 3/18

(54) **Vorrichtung zur Wärmezu- und/oder -abfuhr zu Verbrauchern mit Solarabsorbern mit Anbindung an Wärmepumpen und hydraulischer Umschaltung als Kältemaschine mit Abwärmevernichtung über die Solarabsorber**

(71) Anmelder: Solkav Alternative Energie Systeme GmbH, A-3150 Wilhelmsburg (AT)
(72) Erfinder: Die Erfindernennung liegt noch nicht vor
(74) Vertreter: Babeluk, Michael

(57) **Zusammenfassung**

Vorrichtung zur Wärmezu- und/oder -abfuhr zu Verbrauchern, wie beispielsweise einem Schwimmbecken, einer Raumheizanlage und/oder Raumklimatisierungsanlage mit Niedertemperatur-Solarabsobern mit Anbindung an eine Wärmepumpen, wobei die Wärmepumpe durch hydraulische Umschaltungen als Kältemaschine z.B. für Klimaanlagen oder zur herkömmlichen Wärmeerzeugung verwendet werden kann. Bei Kälteerzeugung kann die anfallende Abwärme zusätzlich über die Solarabsorber abgeführt werden. Bei ausreichender Wärmeenergie aus dem Solarabsorber kann durch hydraulische Umschaltung die Wärmepumpe umgangen werden und die Wärmeenergie direkt dem Verbraucher zugeführt werden.

## Beschreibung

Die Erfindung bezieht sich auf die multifunktionale Nutzung von Wärmepumpen mit angeschlossenen Solarabsorbern als Energieträger, wobei die Verdampfereintrittstemperatur über Bypass-Schaltungen begrenzt wird oder der Solarertrag aus den Solarabsorbern direkt den Verbrauchern zugeführt wird. Durch hydraulische Umschaltung kann mit derselben Wärmepumpe eine Raumklimaanlage betrieben werden und die dabei entstehende Abwärme über die Solarabsorber an die Umwelt abgegeben werden.

Bei Wärmepumpen wird die Eintrittstemperatur des Wärmeträgers in den Verdampfer auf eine Maximaltemperatur begrenzt, um eine Überhitzung des Kältemittels in der Wärmepumpe und somit Beschädigungen der Wärmepumpe zu verhindern. In der Regel wird dies durch Verfahren zur Energiegewinnung mit weniger hohen Temperatur (z.B. Energie aus Erdwärme) und/oder durch Abschalten der Wärmepumpe bewerkstelligt. In der vorliegenden Erfindung wird eine Bypassleitung im Verdampferkreislauf verwendet, um die Temperatur aus dem Niedertemperatur-Solarabsorber auf dem gewünschten Niveau zu halten. Wenn der direkte Solarertrag für den Verbraucher ausreichend ist und/oder zu bestimmten Tageszeiten, wird die Wärmepumpe abgeschaltet und über eine Umgehungsleitung wird die Wärmeenergie aus dem Solarabsorber direkt dem Verbraucher zugeführt, wobei wahlweise ein Wärmetauscher zwischengeschaltet werden kann.

Wärmepumpen können auch zur Erzeugung von Kälte, z.B. für Raumklimaanlagen verwendet werden, wobei die dabei entstehende Abwärme über so genannte Rückkühler abgeführt wird. Eine zwischengeschaltete Rückgewinnung dieser Abwärme gilt als Stand der Technik. Speziell in besiedeltem Gebiet ist die Lärmbelästigung durch externe Rückkühler störend, zumeist in der Nacht, wo zu wenig Bedarf an Wärmeenergie besteht, um die Abwärme anderwärtig zu benutzen. Extrem leise Rückkühler sind in der Regel sehr groß und noch dazu sehr teuer in der Anschaffung. In der vorliegenden Erfindung wird die bestehende Wärmepumpe, die zur Erzeugung von Wärmeenergie für z.B. Raumheizungen oder Schwimmbäder verwendet wird, als Kältemaschine für z.B. Raumklimaanlagen benutzt. In diesem Fall wird die Wärmeerzeugung eingestellt und der Kondensatorkreislauf wird mit dem Kühlregister der Klimaanlage verbunden und über eine Umgehungsleitung mit dem Verdampferkreislauf verbunden. Der Kondensatorkreislauf vor den Absperrventilen zur Umgehungsleitung wird über eine Rückkühlleitung mit dem Verdampferkreislauf / Absorberkreislauf verbunden um die Abwärme über die Solarabsorber an die Umwelt abzugeben.. Falls aufgrund zu geringer Temperaturdifferenzen die Abwärme nicht vollständig abgeführt werden kann, wird ein externer Rückkühler oder ein anderer Wärmeenergie benötigender Verbraucher zugeschaltet.

Die Erfindung wird in nachstehender Zeichnung erläutert.

### Figurenübersicht:

- 1: Solarabsorber
- 1a: Absorberleitungssystem A
- 1b: Absorberleitungssystem B
- 2: Verdampferkreislauf
- 2a: verdampferseitiger Vorlaufleitungsabschnitt des Verdampferkreislaufes
- 2b: verdampferseitiger Rücklaufleitungsabschnitt des Verdampferkreislaufes
- 2a': absorberseitiger Vorlaufleitungsabschnitt des Verdampferkreislaufes
- 2b': absorberseitiger Rücklaufleitungsabschnitt des Verdampferkreislaufes
- 3: Mischventil Verdampferkreislauf
- 4: Bypassleitung Verdampferkreislauf
- 5: Förderpumpe Verdampferkreislauf
- 6a, 6b: Absperrventile Verdampferkreislauf
- 7a, 7b: Absperrventile Rückkühlleitung
- 8a, 8b: Absperrventile Umgehungsleitung
- 9: Wärmepumpe
- 9a: Verdampfer
- 9b: Kondensator
- 10a, 10b: Absperrventile Kondensatorkreislauf
- 11: Kondensatorkreislauf
- 11a: kondensatorseitiger Vorlaufleitungsabschnitt des Kondensatorkreislaufes
- 11b: kondensatorseitiger Rücklaufleitungsabschnitt des Kondensatorkreislaufes
- 11a': verbraucherseitiger Vorlaufleitungsabschnitt des Kondensatorkreislaufes
- 11b': verbraucherseitiger Rücklaufleitungsabschnitt des Kondensatorkreislaufes
- 12: Mischventil Kondensatorkreislauf
- 13: Förderpumpe Kondensatorkreislauf
- 14: Wärmetauscher
- 15a, 15b: Absperrventil Verbraucher 1
- 16: Verbraucher 1
- 17a, 17b: Absperrventil Solarkreislauf
- 18a, 18b: Absperrventil Verbraucher 2
- 19a, 19b: Absperrventil Verbraucher 3
- 20: Solarkreislauf
- 20a: Solarkreislauf Vorlauf
- 20b: Solarkreislauf Rücklauf
- 21: Verbraucher 2
- 21 a: Zuleitung Verbraucher 2 - Vorlauf
- 21 a: Zuleitung Verbraucher 2 - Rücklauf
- 22: Verbraucher 3
- 22a: Zuleitung Verbraucher - Vorlauf
- 22a: Zuleitung Verbraucher - Rücklauf
- 23: Umgehungsleitung
- 23a: Umgehungsleitung Vorlauf
- 23b: Umgehungsleitung Rücklauf
- 24: Rückkühlleitung
- 24a: Rückkühlleitung Vorlauf
- 24b: Rückkühlleitung Rücklauf
- 25: Zuleitung externer Rückkühler
- 25a, 25b: Absperrventil Zuleitung externer Rückkühler
- 26a, 26b: Absperrventil Verdampfer
- 27: Rückschlagklappe
- 28: Absperrventil Pumpenbypass
- 29: externer Rückkühler
- 30: Bypassleitung verbraucherseitiger Kondensatorkreislauf
- 31: Pumpenbypass
- 32: Förderpumpe Solarkreislauf
- T1: Temperaturfühler
- T2, T3: Außentemperaturfühler

Bei der Wärmeproduktion wird die über die Solarabsorber (1) gewonnene Wärmeenergie mittels einer Pumpe (5) über den Vorlauf (2a, 2a') des Verdampferkreislaufes (2) zum Verdampfer (9a) der Wärmepumpe (9) geführt, wo Wärmenergie auf das Kältemittel der Wärmepumpe (9) übertragen wird. Der abgekühlte Wärmeträger wird über den Rücklauf (2b, 2b') des Verdampferkreislaufes (2) zurück in den Absorberkreislauf (1a) geführt, wo wieder Wärmeenergie aufgenommen wird. Die Absperrventile (6a, 6b) im Verdampferkreislauf (2) und die Absperrventile (26a, 26b) am Verdampfer (9a) sind geöffnet. Die Absperrventile (7a, 7b) der Rückkühlleitung (24), die Absperrventile (8a, 8b) der Umgehungsleitung (23) und die Absperrventile (25a, 25b) der Zuleitung zum externen Rückkühler sind geschlossen. Ein Mischventil (3) reguliert die Temperatur des Wärmeträgers in der Vorlaufleitung (2a, 2a') des Verdampferkreislaufes (2), indem kälterer Wärmeträger aus dem Rücklauf (2b, 2b') des Verdampferkreislaufes (2) über eine Bypassleitung (4) in die Vorlaufleitung (2a, 2a') des Verdampferkreislaufes (2) gemischt wird, wobei die Steuerung des Mischventils über die Temperatur des Wärmeträgers in der Vorlaufleitung (2a, 2a') des Verdampferkreislaufes (2) erfolgt. Der Kondensatorkreislauf (11) der Wärmepumpe (9) ist im gegenständlichen Fall an einen Wärmetauscher (14) angeschlossen, der wiederum ausgangsseitig die Verbraucher (16, 22), z.B. ein Schwimmbad und/oder eine Raumheizung, angeschlossen ist. Die Zirkulation des Wärmeträgers im Kondensatorkreislauf (11) erfolgt durch eine Pumpe (13). Die Absperrventile (10a, 10b) im Kondensatorkreislauf (11) sind geöffnet, das Absperrventil (28) im Pumpenbypass (31) und das Mischventil (12) zur Bypassleitung sind geschlossen. Die Absperrventile (19a, 19b, 15a, 15b) regeln die Aufteilung der Wärmeenergie zu den einzelnen Verbrauchern. Die Ventile (18a, 18b) in der Zuleitung zum Verbraucher (18), z.B. Raumklimaanlage sind geschlossen. Die optimale Nutzung der im Solarabsorber (1) aufgenommenen Solarenergie wird durch die Durchflussmenge der Pumpe (5) geregelt, wobei diese durch die Temperatur des Wärmeträgers in der Vorlaufleitung (2a, 2a') des Verdampferkreislaufes (2) und/oder durch die Außentemperatur gesteuert wird. Ist der Solarertrag des Solarabsorbers (1) ausreichend, um einen oder mehrere Verbraucher direkt zu versorgen, wird die Wärmepumpe (9) abgeschaltet, die Absperrventile (26a, 26b) am Verdampfer (9a) der Wärmepumpe (9) und das Mischventil (3) im Verdampferkreislauf (2) zur Bypassleitung hin geschlossen und die Absperrventile (8a, 8b) der Umgehungsleitung (23) geöffnet. Im Kondensatorkreislauf (11) sind die Absperrventile (10a, 10b) und das Mischventil (12) zur Bypassleitung hin geschlossen, das Absperrventil (28) im Pumpenbypass (31) wird geöffnet. Alle anderen Ventile bleiben in der vorher beschriebenen Stellung.

In der gegenständlichen Figur ist der Solarabsorber (1) als Zweileitersystem ausgelegt, wobei ein Absorberkreislauf (1a) mit dem Verdampferkreislauf (2) und der andere Absorberkreislauf (1b) direkt mit dem Verbraucher (16) verbunden sind. Die Absperrventile (17a, 17b) im Solarkreislauf (20) sind bei genügend Solarertrag geöffnet.

Wird die Wärmepumpe zur Kälteproduktion eingesetzt, werden die Ventile (19a, 19b, 15a, 15b) in den Zuleitungen zu den Verbrauchern (16, 22) geschlossen und die Ventile (18a, 18b) des Verbrauchers (21) geöffnet. Die Absperrventile (10a, 10b) im Kondensatorkreislauf und die Absperrventile (6a, 6b) im Verdampferkreislauf sind geschlossen, die Absperrventilen (8a, 8b) der Umgehungsleitung und die Absperrventile (26a, 26b) am Verdampfer (9a) der Wärmepumpe (9) sind geöffnet. Über einen Wärmetauscher (14) wird der Verbraucher (21) mit dem verbraucherseitigen Vor- und Rücklaufleitungsabschnitt (11a', 11b') verbunden, wobei die Pumpe (13) im verbraucherseitigen Vorlaufleitungsabschnitt (11a') des Kondensatorkreislaufes (11) den Wärmeträger über die Umgehungsleitungen (23) und die verdampferseitigen Vor- und Rücklaufleitungsabschnitte (2a, 2b) zum Verdampfer (9a) der Wärmepumpe (9) fördert. Durch das Mischventil (12) im verbraucherseitigen Rücklaufleitungsabschnitt (11b') des Kondensatorkreislaufes (11) wird durch Beimischung von kälterem Wärmeträger aus dem Rücklautleitungsabschnitt (11b') über die Bypassleitung (30) in den absorberseitigen Vorlaufleitungsabschnitt (11a') die Temperatur des Wärmeträgers geregelt, um eine Überhitzung des Kältemittels in der Wärmepumpe (9) zu verhindern. Die durch den Prozess der Wärmepumpe (9) entstehende Abwärme im Kondensator (9b) der Wärmepumpe (9) wird über die kondensatorseitigen Vor- und Rücklaufleitungsabschnitte (11a, 11b), die Rückkühlleitungen (24) und den absorberseitigen Vor- und Rücklaufleitungen (2a', 2b') des Verdampferkreislaufes (2) geleitet und im Absorberleitungssystem (1a) des Solarabsorbers an die Umwelt abgegeben. Die Ventile (7a, 7b) der Rückkühlleitungen sind geöffnet, die Absperrventile (25a, 25b) sowie das Mischventil (3) im absorberseitigen Rücklaufleitungsabschnitt (2b') des Verdampferkreislaufes (2) steuern die Verteilung der abzuführenden Abwärme zwischen Solarabsorber (1) und dem externen Rückkühler (29).

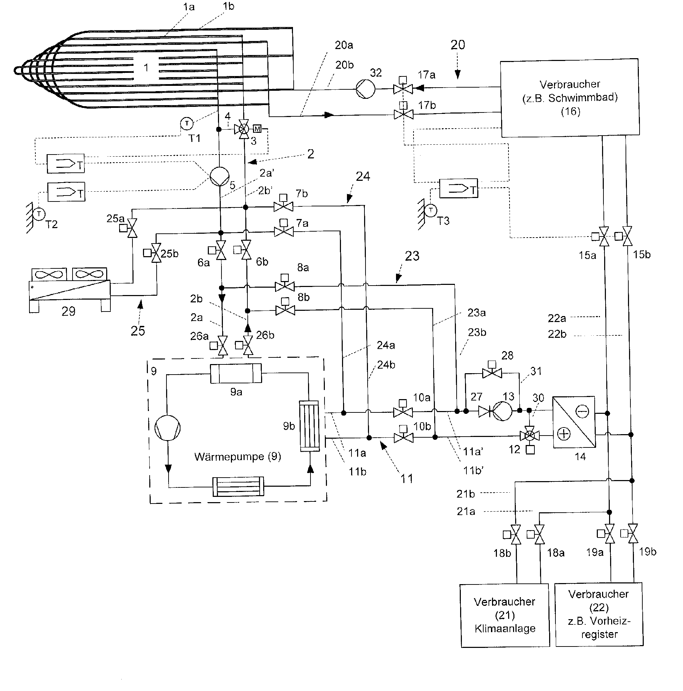

## Patentansprüche

1. Vorrichtung zur Wärmezu- und/oder -abfuhr zu Verbrauchern, wie beispielsweise einem Schwimmbecken (16), einer Raumheizanlage (22) und/oder Raumklimatisierungsanlage (21), mit einem Solarabsorber (1) mit einem oder zwei jeweils flüssige Wärmeträger führenden Absorberleitungssystemen (1a, 1b), einer Wärmepumpe (9), einem Verdampferkreislauf (2), der ein Absorberleitungssystem (1a) des Solar-Absorbers (1) mit dem Verdampfer (9a) der Wärmepumpe (9) verbindet, wobei im Verdampferkreislauf (2) eine Pumpe (5) vorgesehen ist, **dadurch gekennzeichnet, dass** die Rücklaufleitung (2b, 2b') des Verdampferkreislaufes (2) mit der Vorlaufleitung (2a, 2a') des Verdampferkreislaufes (2) über eine Bypassleitung (4) verbunden ist, wobei ein Mischventil (3), insbesondere in der Rücklaufleitung (2b, 2b'), vorgesehen ist, mit dem kälterer Wärmeträger aus der Rücklaufleitung (2b, 2b') der Vorlaufleitung (2a, 2a') beigemischt werden kann.

2. Vorrichtung nach Anspruch 1, **dadurch gekennzeichnet, dass** der Solarabsorber (1) als Zweileitungsabsorber ausgeführt ist, wobei zwei getrennte Absorberleitungssysteme (1a, 1b) vorliegen, die mit unterschiedlichen Wärmeträgern unterschiedliche Verbraucher mit unterschiedlichen Temperaturen versorgen.

3. Vorrichtung nach Anspruch 2, **dadurch gekennzeichnet, dass** ein Absorberleitungssystem (1a) den Verdampferkreislauf (2) der Wärmepumpe (9) und das andere Absorberleitungssystem (1b) einen Solarlcreislauf (20) mit direkt angebundenen Verbrauchern (16) versorgt.

4. Vorrichtung nach Anspruch 3, **dadurch gekennzeichnet, dass** ein Kondensatorkreislauf (11) den Kondensator (9b) der Wärmepumpe (9) über eine Vorleitung (11a, 11a', 21a, 22a) und eine Rücklaufleitung (11b, 11b', 21b, 22b) mit einem oder mehreren Verbrauchern (16, 21, 22) verbindet.

5. Vorrichtung nach Anspruch 4, **dadurch gekennzeichnet, dass** ein Wärmetauscher (14) vorgesehen ist, der den Kondensatorkreislauf (11) mit den Verbraucherkreisläufen (3 3), (34) verbindet.

6. Vorrichtung nach einem der Ansprüche 1 ― 5, **dadurch gekennzeichnet, dass** den Verbrauchern (16, 21, 22) Absperrventile (15a, 15b, 17a, 17b, 18a, 18b, 19a, 19b) vorgeschaltet sind.

7. Vorrichtung nach einem der Ansprüche 4 ― 6, **dadurch gekennzeichnet, dass** in der Vorlauflaufleitung (11a, 11a', 21 a, 22a) und in der Rücklaufleitung (11b, 11b', 21b, 22b) des Kondensatorkreislaufes (11) Absperrventile (10a, 10b) zum Trennen der kondensatorseitigen Vorlauf- und Rücklaufleitungsabschnitte (11a, 11b) von den verbraucherseitigen Vorlauf- und Rücklaufleitungsabschnitten (11a', 11b', 21a, 21b, 22a, 22b) vorgesehen sind, und dass Absperrventile (6a, 6b) in der Vorlaufleitung (2a, 2a') und in der Rücklaufleitung (2b, 2b') des Verdampferkreislaufes (2) zum Trennen der absorberseitigen Vorlauf- und Rücklaufleitungsabschnitte (2a', 2b') von den verdampferscitigen Vor- und Rücklaufleitungsabschnitten (2a, 2b) vorgesehen sind, wobei die verbraucherseitigen Vorlauf- und Rücklaufleitungsabschnitte (11a', 11b') des Kondensatorkreislaufes (11) über Umgehungsleitungen (23) mit den verdampferseitigen Vor- und Rücklaufleitungsabschnitten (2a, 2b) des Verdampferkreislaufes (2) der Wärmepumpe (9) verbunden sind und die kondensatorseitigen Vorlauf- und Rücklaufleitungsabschnitte (11a, 11b) des Kondensatorkreislaufes (11) über Rückkühlleitungen (24) mit den absorberseitigen Vor- und Rücklaufleitungsabschnitten (2a', 2b') des Verdampferkreislaufes (2) verbunden sind.

8. Vorrichtung nach Anspruch 7, **dadurch gekennzeichnet, dass** die Rückkühlleitungen (24) mit einer zusätzlichen Kühlvorrichtung (29), insbesondere Glykolrückkühler, zur Abwärmevernichtung verbunden sind

9. Vorrichtung nach Anspruch 7 oder 8, **dadurch gekennzeichnet, dass** die verbraucherseitigen Vor- und Rücklaufleitungsabschnitte (11a', 11b') des Kondensatorkreislaufes (11) über eine Bypassleitung (30) verbunden sind, wobei ein Mischventil (12), insbesondere im Rücklaufleitungsabschnitt (11b'), vorgesehen ist, mit dem kälterer Wärmeträger aus dem Rücklaufleitungsabschnitt (11b') dem Vorlaufleitungsabschnitt (11a') beigemischt werden kann.

10. Verfahren zur Wärmezu- und/oder -abfuhr zu Verbrauchern, wie beispielsweise einem Schwimmbecken (16), einer Raumheizanlage (22) und/oder Raumklimatisierungsanlage (21), mit einer Vorrichtung nach einem der Ansprüche 1-9 mit einem Solarabsorber (1) mit einem oder zwei jeweils flüssige Wärmeträger führenden Absorberleitungssystemen (1a, 1b), einer Wärmepumpe (9), einem Verdampferkreislauf (2), der ein Absorberleitungssystem (1a) des Solar-Absorbers (1) mit dem Verdampfer (9a) der Wärmepumpe (9) verbindet, wobei im Verdampferkreislauf (2) eine Pumpe (5) vorgesehen ist, **dadurch gekennzeichnet, dass** als Überhitzungsschutz für die Wärmepumpe (9) die Begrenzung der Kältemitteltemperatur der Wärmepumpe (9) durch Beimischung von kälterem Wärmeträger aus der Rücklaufleitung (2b, 2b') des Verdampferkreislaufes (2) zur Vorlaufleitung (2a, 2a') des Verdampferkreislaufes (2) über ein Mischventil (3) erfolgt.

11. Verfahren nach Anspruch 10, **dadurch gekennzeichnet, dass** das Mischventil (3) entsprechend der Temperatur des Wärmeträgers in der Vorlaufleitung (2a, 2a') des Verdampferkreislaufes (2) geregelt wird.

12. Verfahren nach Anspruch 10 oder 11, **dadurch gekennzeichnet, dass** die Fördermenge der Pumpe (5) des Verdampferkreislaufes (2) mit steigender Temperatur des Wärmeträgers in der Vorlaufleitung (2a, 2a') erhöht wird.

13. Verfahren nach Anspruch 12, **dadurch gekennzeichnet, dass** die Fördermenge der Pumpe (5) in Abhängigkeit von der Außentemperatur geregelt wird.

14. Verfahren nach Anspruch 9-13, **dadurch gekennzeichnet, dass** bei hohem Wärmeangebot durch die Sonneneinstrahlung der Solarkreislauf (20) durch Öffnen der Ventile (17a, 17b) und bei geringem Wärmeangebot durch Sonneneinstrahlung zusätzlich der Kondensatorkreislauf (11) durch Öffnen der Ventile (15a, 15b) zur Versorgung des Verbrauchers (16) in Betrieb geht.

15. Verfahren nach einem der Ansprüche 9-14, **dadurch gekennzeichnet, dass** die Wärme der Klimaanlage (21) über den Kreislauf, der aus Vor- und Rücklaufleitung (21a, 21b) der Klimaanlage (21), aus den verbraucherseitigen Vor- und Rücklaufleitungsabschnitten (11a', 11b'), aus den Umgehungsleitungen (23) und den verdampferseitigen Vor- und Rücklaufleitungsabschnitten (2a, 2b) besteht, dem Verdampfer (9a) der Wärmepumpe (9) zugeführt wird.

16. Verfahren nach Anspruch 15, **dadurch gekennzeichnet, dass** als Überhitzungsschutz für die Wärmepumpe (9) die Begrenzung der Kältemitteltemperatur der Wärmepumpe (9) durch Beimischung von kälterem Wärmeträger aus dem verbraucherseitigen Rücklaufleitungsabschnitt (11b') des Kondensatorkreislaufes (11) zum verbraucherseitigen Vorlaufleitungsabschnitt (11a') des Kondensatorkreislaufes (11) über das Mischventil (12) erfolgt.

17. Verfahren nach Anspruch 16, **dadurch gekennzeichnet, dass** das Mischventil (12) entsprechend der Temperatur des Wärmeträgers in dem verbraucherseitigen Vorlaufleitungsabschnitt (11a') des Kondensatorkreislaufes (11) geregelt wird.

18. Verfahren nach einem der Ansprüche 9-17, **dadurch gekennzeichnet, dass** die Fördermenge der Pumpe (13) des Kondensatorkreislaufes (11) mit steigender Temperatur des Wärmeträgers in der Vorlaufleitung (11a, 11a') erhöht wird.

19. Verfahren nach einem der Ansprüche 15-18, **dadurch gekennzeichnet, dass** die Abwärme aus der Wärmepumpe (9) über den Kreislauf, der aus den kondensatorseitigen Vor- und Rücklaufleitungsabschnitten (11a, 11b) des Kondensatorkreislaufes (11), aus den Rückkühlleitungen (24), aus den absorberseitigen Vor- und Rücklaufleitungsabschnitten (2a', 2b') und dem Absorberleitungssystem (1a) und/oder dem Kreislauf (25) einer zusätzlichen Kühlvorrichtung (29), insbesondere Glykolrückkühler, besteht, abgeführt wird.

20. Verfahren nach Anspruch 19, **dadurch gekennzeichnet, dass** eine Aufteilung der abzugebenden Abwärmeenergie zwischen Solarabsorber (1) und einer anderen zusätzlichen Vorrichtung (29) zur Abwärmevernichtung mittels den Ventilen (25a, 25b) und einem Mischventil (3) in Abhängigkeit von der Außentemperatur und der Temperatur des Wärmeträgers in der Vorlaufleitung (24a) der Rückkühlleitung (24) geregelt wird.

21. Verfahren nach einem der Ansprüche 9-14, **dadurch gekennzeichnet, dass** die Ventile (8a, 8b) in den Umgehungsleitungen (23) und die Ventile (26a, 26b) in der Verdampferleitung (2) in Abhängigkeit von Außentemperatur und/oder Zeitvorgaben und/oder dem Betriebszustand der Wärmepumpe (9) geregelt werden.

22. Verfahren nach Anspruch 21, **dadurch gekennzeichnet, dass** zur Direktnutzung des Absorbers (1) bei abgeschalteter Wärmepumpe (9) der Verdampferkreislauf (2) über eine Umgehungsleitung (23) mit dem Kondensatorkreislauf (11) verbunden ist, wobei die Ventile (26a, 26b) geschlossen sind, die Ventile (8a, 8b) geöffnet sind.
